# EUROPEAN PATENT APPLICATION

(11) **EP 3 627 806 A1**
(43) Date of publication of application: **25.03.2020**
(21) Application number: 17913279.0
(22) Date of filing: 30.09.2017
(51) Int. Cl.: H04M 1/725

(54) **METHOD FOR GENERATING USER PORTRAIT, AND TERMINAL**

(30) Priority: 16.06.2017 CN 201710459602
(71) Applicant: Huawei Technologies Co., Ltd., Longgang District Shenzhen, Guangdong 518129 (CN)
(72) Inventor: ZHOU, Li, Shenzhen Guangdong 518129 (CN); LIU, Mohan, Shenzhen Guangdong 518129 (CN); JIANG, Jiyong, Shenzhen Guangdong 518129 (CN); YANG, Renzhi, Shenzhen Guangdong 518129 (CN); WANG, Xiyong, Shenzhen Guangdong 518129 (CN)
(74) Representative: Gill Jennings & Every LLP
(86) International application number: PCT/CN2017/105128
(87) International publication number: WO 2018/227823

(57) **Abstract**

Embodiments of the present invention provide a user profile generation method and a terminal. The terminal includes a user profile platform and a first application. The method includes: receiving, by the user profile platform, a first request sent by the first application, where the first request is used to request a current user profile; obtaining, by the user profile platform based on the first request, a first user profile type required by the first application; in response to the first request, obtaining, by the user profile platform according to a user profile model, a current user profile corresponding to the first user profile type, where the user profile model is included in the user profile platform; and sending, by the user profile platform, the obtained current user profile to the first application. The terminal in the embodiments of the present invention can increase data security while providing a user profile.

## Description

This application claims priority to Chinese Patent Application No. 201710459602.7, filed with the Chinese Patent Office on June 16, 2017 and entitled "USER PROFILE GENERATION METHOD AND TERMINAL", which is incorporated herein by reference in its entirety.

### TECHNICAL FIELD

Embodiments of the present invention relate to smartening technologies, and in particular, to a user profile generation method and a terminal.

### BACKGROUND

With development of intelligent services, some applications on a mobile terminal may recommend some user-interested content based on preference of a user. In the prior art, usually, an application collects behaviors of a user when the user uses the application, and sends these behaviors to a server corresponding to the application; and then the server comprehensively determines preference of the user based on user behaviors received from a plurality of terminals, and then delivers, to the application, content that matches the preference of the user. Therefore, in the prior art, to obtain the preference of the user, the terminals need to report user data to the server. This may result in a leakage of user privacy data.

### SUMMARY

Embodiments of the present invention provide a user profile generation method and a terminal, so as to increase data security.

According to a first aspect, an embodiment of the present invention provides a user profile generation method that is applied to a terminal. The method is applied to a terminal. The terminal includes a user profile platform and a first application, and the user profile platform includes a user profile model. The method includes:
receiving, by the user profile platform, a first request sent by the first application, where the first request is used to request a current user profile; obtaining, by the user profile platform based on the first request, a first user profile type required by the first application; in response to the first request, obtaining, by the user profile platform according to the user profile model, a current user profile corresponding to the first user profile type; and then sending, by the user profile platform, the obtained current user profile to the first application. As a user continuously uses the terminal, a user profile in the terminal is continuously updated. The current user profile is a user profile existing when the user profile platform receives the first request. A terminal can generate a user profile based on a local user profile platform, and provide the generated user profile to an application. Therefore, the application can obtain a user profile locally from the terminal, without providing user data to a network side, thereby increasing security of user data.

In a possible implementation, the method further includes: when the user profile platform receives an update request, updating, by the user profile platform, a current user profile model based on user data. During a process in which the user uses the terminal, a user profile model is also continuously updated.

In another possible implementation, before the receiving, by the user profile platform, a first request sent by the first application, the method further includes: receiving, by the user profile platform, a registration request sent by the first application, where the registration request includes the first user profile type required by the first application. The first application can request a user profile from the user profile platform only after sending the registration request to the user profile platform.

In another possible implementation, when the user profile platform receives the registration request, if the current user profile model does not include the first user profile type, the updating, by the user profile platform, a current user profile model based on user data includes: adding, by the user profile platform, the first user profile type to the current user profile model based on the user data.

In another possible implementation, the updating, by the user profile platform, a current user profile model based on user data includes: obtaining, by the user profile platform based on the user data, from a tag base of the user profile platform, a user tag corresponding to the user data; and updating, by the user profile platform, the current user profile model based on at least one of the user data and the user tag.

In another possible implementation, an original user profile model included in the user profile platform is stored in the terminal in advance.

In another possible implementation, the user profile platform obtains an original user profile model from a network side in advance.

The user profile model may include at least one of a static profile model and a dynamic profile model.

In another possible implementation, when the user profile model is a dynamic profile model, the obtaining, by the user profile platform according to the user profile model, a current user profile corresponding to the first user profile type includes: obtaining, by the user profile platform, current scenario data; and obtaining, by the user profile platform through computation based on the scenario data and the user profile model, the current user profile corresponding to the first user profile type.

In another possible implementation, the terminal further includes a second application, and the method further includes:
receiving, by the user profile platform, a second request sent by the second application, where the second request is used to request a current user profile; obtaining, by the user profile platform based on the second request, a second user profile type required by the second application; in response to the second request, obtaining, by the user profile platform according to a current user profile model, a current user profile corresponding to the second user profile type; and sending, by the user profile platform to the second application, the current user profile corresponding to the second user profile type. A plurality of applications in the terminal may each obtain a user profile from the user profile platform.

Specifically, the user profile may include a predicted result of a current behavior or preference of the user. For example, the predicted result includes the following: Current possible behaviors of the user include a first behavior, a second behavior, and a third behavior; a probability that the user may perform the first behavior is f1, a probability that the user may currently perform the second behavior is f2, and a probability that the user may currently perform the third behavior is f3. The first behavior is, for example, buying coffee, the second behavior is, for example, buying bread, and the third behavior is, for example, watching a movie. For another example, the predicted result includes the following: A probability that the user has first preference is f4, and a probability that the user has second preference is f5; the first preference is, for example, a mystery movie, and the second preference is, for example, an art movie.

According to a second aspect, an embodiment of the present invention provides a terminal, including a first application and a user profile platform. The user profile platform includes a data collection module, a knowledge base module, a tag base, and a user profile management module.

The data collection module is configured to collect first user data of the terminal. The knowledge base module is configured to: obtain the first user data from the data collection module, obtain second user data based on the first user data, and generate or update a knowledge base based on the second user data, where the knowledge base is configured to store the second user data. The tag base is configured to store a tag. The user profile management module is configured to store a user profile model.

The user profile management module is further configured to: obtain a tag corresponding to the second user data from the tag base based on the second user data in the knowledge base, and generate a user tag.

The user profile management module is further configured to update a current user profile model based on at least one of the second user data and the user tag.

The user profile management module is further configured to: receive a first request sent by the first application, where the first request is used to request a current user profile; and in response to the first request, obtain, based on the first request, a first user profile type required by the first application, obtain, according to a current user profile model, a current user profile corresponding to the first user profile type, and send the obtained current user profile to the first application.

In a possible implementation, the user profile management module is further configured to: before receiving the first request sent by the first application, receive a registration request sent by the first application, where the registration request includes the first user profile type required by the first application.

In another possible implementation, when the user profile management module receives the registration request, if the current user profile model does not include the first user profile type, that the user profile management module updates the current user profile model based on at least one of the second user data and the user tag includes: the user profile management module adds the first user profile type to the current user profile model based on at least one of the second user data and the user tag.

In another possible implementation, the user profile management module updates the current user profile model in the following manner: When an update request is received, the user profile management module updates the current user profile model based on at least one of the second user data and the user tag.

In another possible implementation, an original user profile model is stored in the user profile management module in advance.

In another possible implementation, the user profile management module is further configured to obtain an original user profile model from a network side in advance.

In another possible implementation, the user profile model includes at least one of a static profile model and a dynamic profile model.

In another possible implementation, when the user profile model is a dynamic profile model, that the user profile management module obtains, according to the current user profile model, the current user profile corresponding to the first user profile type includes:
the user profile management module obtains current scenario data from the data collection module; and
the user profile management module obtains, through computation based on the scenario data and the current user profile model, the current user profile corresponding to the first user profile type.

In another possible implementation, the terminal further includes a second application, and the user profile management module is further configured to:
receive a second request sent by the second application, where the second request is used to request a current user profile; and in response to the second request, obtain, based on the second request, a second user profile type required by the second application, obtain, according to a current user profile model, a current user profile corresponding to the second user profile type, and send, to the second application, the current user profile corresponding to the second user profile type.

In another possible implementation, the user profile is a predicted result of a current behavior of a user.

According to a third aspect, an embodiment of the present invention provides a terminal, including one or more processors and one or more memories. The one or more memories store one or more computer programs. The one or more computer programs include an instruction. When the instruction is executed by the one or more processors, the terminal performs the method described in the foregoing first aspect.

According to a fourth aspect, an embodiment of the present invention provides a computer program product that includes an instruction. When the computer program product runs on an electronic device, the electronic device performs the method described in the foregoing first aspect.

According to a fifth aspect, an embodiment of the present invention provides a computer-readable storage medium that includes an instruction. When the instruction runs on an electronic device, the electronic device performs the method described in the foregoing first aspect.

According to a sixth aspect, an embodiment of the present invention further provides a data processing system, including a module that is configured to perform the method provided in the foregoing first aspect.

### BRIEF DESCRIPTION OF DRAWINGS

FIG 1 is a block diagram of a partial structure of a terminal according to an embodiment of the present invention;
FIG 2 is a schematic architectural diagram of a system according to an embodiment of the present invention;
FIG 3 is a schematic architectural diagram of a user profile platform according to an embodiment of the present invention;
FIG 4A-a and FIG 4A-b are a schematic diagram of a static tag according to an embodiment of the present invention;
FIG. 4B is a schematic diagram of a real-time scenario tag according to an embodiment of the present invention;
FIG. 5 is a schematic diagram of original user data according to an embodiment of the present invention;
FIG. 6 is a schematic flowchart of a user profile generation method according to an embodiment of the present invention;
FIG. 7 is a flowchart of a user profile model updating method according to an embodiment of the present invention; and
FIG. 8 is a schematic diagram of a work procedure of a user profile platform according to an embodiment of the present invention.

### DESCRIPTION OF EMBODIMENTS

With development of smart services, some intelligent reminders or services may be implemented on a terminal according to a historical behavioral habit of a user or according to some rules or models, so that the user uses the terminal more conveniently and the user feels that the terminal is becoming increasingly intelligent.

The terminal may implement various smart services either by itself or by combining with a cloud. Specifically, the terminal may include a rule platform, an algorithm platform, and a user profile platform. The terminal may implement various smart services by using one or more of the three platforms and other resources, for example, 1. a service recommendation service, 2. a reminding service, and 3. a notification filtering service.
1. Service recommendation service: The terminal includes a service recommendation framework (framework) that is configured to implement the service recommendation service. The service recommendation framework may include at least an algorithm platform, a rule platform, and a user profile platform. The rule platform may obtain, through matching according to a rule, a service that the user of the terminal wants to use in a current scenario. The algorithm platform may predict, according to a model, a service that the user of the terminal wants to use in a current scenario. The service recommendation framework may place, in a display interface of a recommendation application, the service predicted by the rule platform or the algorithm platform, so that the user can access, very conveniently by using the display interface of the recommendation application, an interface corresponding to the service. The rule may be delivered by a server (that is, the cloud) to the terminal. The rule may be obtained according to big-data statistics, or may be obtained through induction based on empirical data. The model may be obtained in the following manner: obtaining the model by training historical data and characteristic data of the user by the algorithm platform. In addition, the model may be updated based on new user data and characteristic data. The historical data of the user may be behavior data generated when the user uses the terminal within a period of time. The characteristic data of the user may include a user profile (user profile) or characteristic data of another type. The characteristic data of another type may be, for example, behavior data of a current user. The user profile may be obtained from the user profile platform in the terminal.
2. Reminding service: The terminal includes a recommendation framework (framework) that is configured to implement the reminding service. The recommendation framework may include at least a rule platform, a graphical user interface (graphical user interface), and a user profile platform. The rule platform may listen to various events. An application in the terminal may register various rules with the rule platform. Then, the rule platform listens to various events in the terminal according to the registered rules, and matches a detected event with the rules. When the detected event matches all conditions of a rule, the rule platform triggers a reminder corresponding to the rule. In other words, the rule platform recommends a highlight event to the user. Finally, the graphical user interface displays the reminder, or an application that registers the rule displays the reminder. Conditions of some rules may be constraints on a user profile. The rule platform may request a current user profile from the user profile platform, to determine whether the current user profile matches a condition of a rule.
3. Notification filtering service: The terminal includes a notification filtering framework (framework) that is configured to implement the notification filtering service. The notification filtering framework may include at least a rule platform, an algorithm platform, and a user profile platform. When obtaining a notification, the notification filtering framework may determine a type of the notification by using the rule platform or by using the algorithm platform. Then, the notification filtering framework determines, based on the type of the notification and preference of the user, whether the notification is a user-interested notification. In addition, for a user-interested notification and for a user-uninterested notification, the notification filtering framework displays reminders in different manners. The preference of the user may include a user profile, or may include a historical processing behavior of the user for notifications of a specific type. The user profile is provided by the user profile platform.

It should be noted that the terminal may include one rule platform, and the rule platform provides the foregoing three frameworks with capabilities required by the frameworks. The terminal may alternatively include a plurality of rule platforms, and the plurality of rule platforms provide capabilities for the foregoing three frameworks. Similarly, the terminal may include one algorithm platform, and the algorithm platform provides the foregoing service recommendation framework and the notification filtering framework with capabilities required by the frameworks; or the terminal may include two algorithm platforms that provide capabilities for the two frameworks. The terminal may include one user profile platform, and the user profile platform provides the foregoing three frameworks with capabilities required by the frameworks; or the terminal may include a plurality of user profile platforms that provide capabilities for the frameworks, respectively.

The following embodiments in this application mainly describe the foregoing user profile platform in detail.

The user profile platform provided in the embodiments of the present invention may be included in a terminal. The terminal may be, for example, a mobile phone, a tablet computer (Tablet Computer), a laptop computer (Laptop Computer), a digital camera, a personal digital assistant (personal digital assistant, PDA for short), a navigation apparatus, a mobile Internet device (Mobile Internet Device, MID), or a wearable device (Wearable Device).

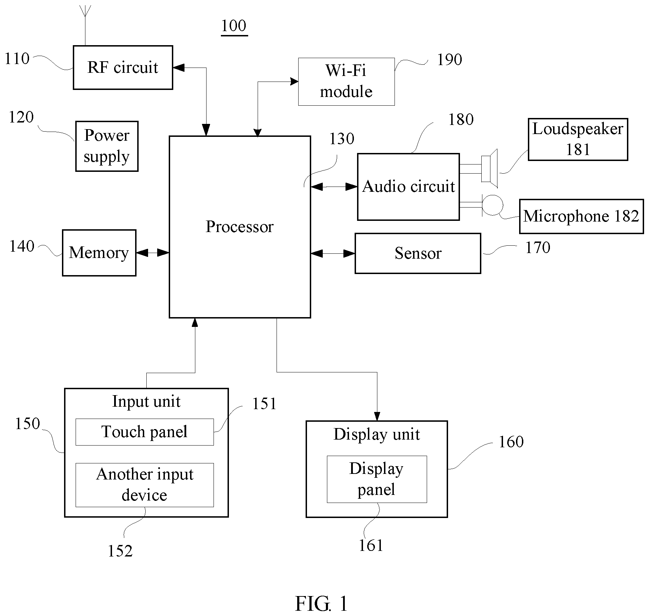

FIG. 1 is a block diagram of a partial structure of a terminal according to an embodiment of the present invention. The terminal is described by using a mobile phone 100 as an example. Referring to FIG. 1, the mobile phone 100 includes components such as a radio frequency (Radio Frequency, RF) circuit 110, a power supply 120, a processor 130, a memory 140, an input unit 150, a display unit 160, a sensor 170, an audio circuit 180, and a Wireless Fidelity (wireless fidelity, Wi-Fi) module 190. A person skilled in the art may understand that the mobile phone structure shown in FIG. 1 does not constitute any limitation on the mobile phone. The mobile phone may include components more or fewer than those shown in the figure, or a combination of some components, or the components arranged differently.

The following describes each component of the mobile phone 100 in detail with reference to FIG. 1.

The RF circuit 110 may be configured to receive and send signals during receiving and sending of information or in a call process. For example, the RF circuit 110 may send downlink data received from a base station to the processor 130 for processing, and send uplink data to the base station. Usually, the RF circuit includes but is not limited to an RF chip, an antenna, at least one amplifier, a transceiver, a coupler, a low noise amplifier (Low Noise Amplifier, LNA), a duplexer, a radio frequency switch, and the like. In addition, the RF circuit 110 may further perform wireless communication with a network and another device. Any communications standard or protocol may be used for the wireless communication, including but not limited to Global System for Mobile Communications (Global System for Mobile Communications, GSM), general packet radio service (General Packet Radio Service, GPRS), Code Division Multiple Access (Code Division Multiple Access, CDMA), Wideband Code Division Multiple Access (Wideband Code Division Multiple Access, WCDMA), Long Term Evolution (Long Term Evolution, LTE), an email, a short messaging service (Short Messaging Service, SMS), and the like.

The memory 140 may be configured to store a software program and a module. The processor 130 runs the software program and the module that are stored in the memory 140, so as to execute various function applications of the mobile phone 100 and perform data processing. The memory 140 may mainly include a program storage area and a data storage area. The program storage area may store an operating system, an application program required by at least one function (such as an audio playing function and an image playing function), and the like. The data storage area may store data (such as audio data and a phone book) that is created based on use of the mobile phone 100, and the like. In addition, the memory 140 may include a high-speed random access memory, and may further include a nonvolatile memory, for example, at least one disk storage device, a flash memory device, or another volatile solid-state storage device. The memory 140 may further store a knowledge base, a tag base, and an algorithm base.

The input unit 150 may be configured to receive input digit or character information, and generate a key signal input related to a user setting and function control of the mobile phone 100. Specifically, the input unit 150 may include a touch panel 151 and another input device 152. The touch panel 151 is also referred to as a touchscreen, and may collect a touch operation performed by the user on or near the touch panel 151 (for example, an operation performed by a user on or near the touch panel 151 by using any proper object or accessory such as a finger or a stylus), and drive a corresponding connecting apparatus based on a preset program. Optionally, the touch panel 151 may include two parts: a touch detection apparatus and a touch controller. The touch detection apparatus detects a touch orientation of the user, detects a signal brought by a touch operation, and transmits the signal to the touch controller. The touch controller receives touch information from the touch detection apparatus, converts the touch information into contact coordinates, and sends the contact coordinates to the processor 130, and can receive and execute a command sent by the processor 130. In addition, the touch panel 151 may be implemented by using a plurality of types, such as a resistive type, a capacitive type, an infrared type, and a surface acoustic wave type. In addition to the touch panel 151, the input unit 150 may further include the another input device 152. Specifically, the another input device 152 may include but is not limited to one or more of a physical keyboard, a function key (such as a volume control key or an on/off key), a trackball, a mouse, and a joystick.

The display unit 160 may be configured to display information entered by a user or information provided for a user and various menus of the mobile phone 100. The display unit 160 may include a display panel 161. Optionally, the display panel 161 may be configured in a form such as a liquid crystal display (liquid crystal display, LCD for short) or an organic light-emitting diode (organic light-emitting diode, OLED for short). Further, the touch panel 151 may cover the display panel 161. When the touch panel 151 detects a touch operation on or near the touch panel 151, the touch panel 151 transmits the touch operation to the processor 130 to determine a type of a touch event. Then, the processor 130 provides a corresponding visual output on the display panel 161 according to the type of the touch event. In FIG. 1, the touch panel 151 and the display panel 161 are configured as two independent components to implement input and input functions of the mobile phone 100. However, in some embodiments, the touch panel 151 and the display panel 161 may be integrated to implement the input and output functions of the mobile phone 100.

The mobile phone 100 may further include at least one sensor 170, such as a light sensor, a motion sensor, or another sensor. Specifically, the light sensor may include an ambient light sensor and a proximity sensor. The ambient light sensor may adjust luminance of the display panel 161 based on brightness of ambient light. The proximity sensor may turn off the display panel 161 and/or backlight when the mobile phone 100 moves near an ear. As a type of motion sensor, an accelerometer sensor may detect acceleration values in all directions (usually in three axes), may detect a value and a direction of gravity when the accelerometer sensor is stationary, and may be used in a posture identification application of the mobile phone (such as switching between a landscape mode and a portrait mode, related games, and magnetometer posture calibration), a vibration related function (such as a pedometer or a knock), and the like. For other sensors that may be further configured for the mobile phone 100, such as a gyroscope, a barometer, a hygrometer, a thermometer, and an infrared sensor, details are not described herein.

The audio circuit 180, a loudspeaker 181, and a microphone 182 may provide an audio interface between the user and the mobile phone 100. The audio circuit 180 may transmit, to the loudspeaker 181, an electrical signal that is obtained through conversion of received audio data, and the loudspeaker 181 converts the electrical signal into a sound signal and outputs the sound signal. In addition, the microphone 182 converts a collected sound signal into an electrical signal. The audio circuit 180 receives the electrical signal, converts the electrical signal into audio data, and outputs the audio data to the RF circuit 110. Then, the audio data is sent, for example, to another mobile phone, or the audio data is output to the memory 140 for further processing.

Wi-Fi is a short-range wireless transmission technology. The mobile phone 100 may help, by using the Wi-Fi module 190, the user to send and receive e-mails, browse web pages, access streaming media, and the like. Wi-Fi provides wireless broadband Internet access for the user. Although FIG. 1 shows the Wi-Fi module 190, it may be understood that the Wi-Fi module 190 is not a mandatory component of the mobile phone 100, and may be completely omitted based on a requirement without changing the essence of the present invention.

The processor 130 is a control center of the mobile phone 100, is connected to all parts of the entire mobile phone 100 by using various interfaces and lines, and performs various functions of the mobile phone 100 and data processing, by running or executing the software program and/or the module that is stored in the memory 140 and by invoking data stored in the memory 140, so as to implement a plurality of services that are based on the mobile phone. Optionally, the processor 130 may include one or more processing units. Preferably, an application processor and a modem processor may be integrated into the processor 130. The application processor mainly processes an operating system, a user interface, an application program, and the like. The modem processor mainly processes wireless communication. It may be understood that the foregoing modem processor may alternatively not be integrated into the processor 130.

In this embodiment of the present invention, the processor 130 may execute a program instruction stored in the memory 140, to perform a method shown in the following embodiment.

The mobile phone 100 further includes the power supply 120 (such as a battery) that supplies power to each component. Preferably, the power supply may be logically connected to the processor 130 by using a power management system, so that functions such as management of charging, discharging, and power consumption are implemented by using the power management system.

The mobile phone 100 may further include a camera, a Bluetooth module, and the like, although they are not shown. Details are not described herein.

A terminal provided in the embodiments of the present invention includes a user profile platform. The user profile platform may abstract an information panorama of a user by collecting and analyzing various behavior data of the user who uses the terminal. Based on a request of an application, the user profile platform may predict a current possible behavior or preference of the user based on the abstracted information panorama, and return a predicted result to the application, that is, return a user profile (User Profile) to the application.

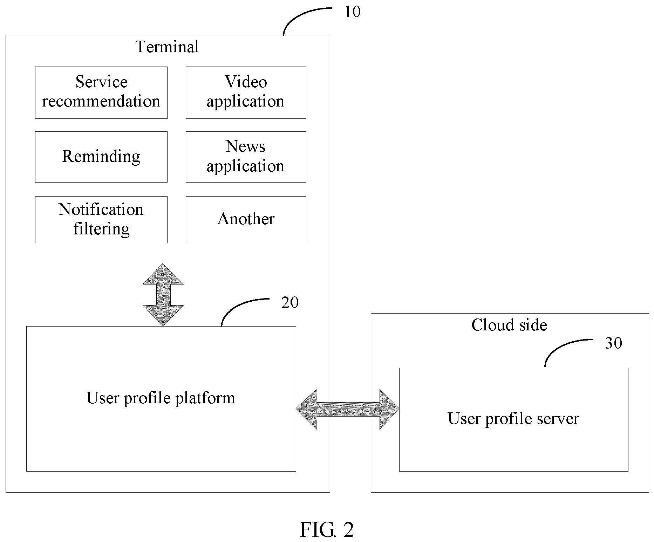

An embodiment of the present invention may provide a terminal with a user profile platform. FIG. 2 is a schematic architectural diagram of a system according to an embodiment of the present invention. As shown in FIG. 2, a terminal 10 includes a user profile platform 20.

The user profile platform 20 may provide a user profile for a plurality of applications in the terminal 10. The applications may be system-level applications, or may be general-level applications. The system-level application usually means that the application has system-level permission and can obtain various system resources. The general-level application usually means that the application has general permission and may not be able to obtain some system resources, or the application can obtain some system resources only after being authorized by the user. The system-level application may be an application preinstalled in the terminal. The general-level application may be an application preinstalled in the terminal, or may be an application subsequently installed by the user. For example, the user profile platform 20 may provide a user profile for the system-level applications such as a service recommendation application, a reminding application, and a notification filtering application. The service recommendation application, the reminding application, and the notification filtering application are used to implement the foregoing service recommendation service, the reminding service, and the notification filtering service, respectively. The user profile platform 20 may further provide a user profile for a video application, a news application, or another application.

The user profile platform 20 may further communicate with a user profile server 30 on a cloud side (that is, a network side). The user profile platform 20 may download an original user profile model from the user profile server 30, and then the user profile platform 20 dynamically updates the user profile model. The user profile platform 20 may further return the updated user profile model to the user profile server 30. The user profile server 30 may perform further training according to user profile models updated by a plurality of user profile platforms 20 in a plurality of terminals, to obtain an updated user profile model.

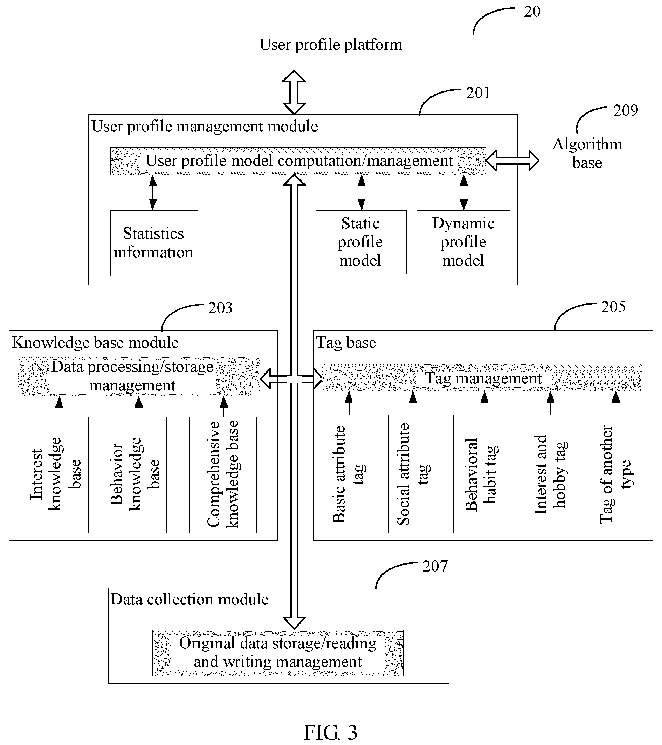

FIG. 3 is a schematic architectural diagram of a user profile platform according to an embodiment of the present invention. As shown in FIG. 3, the user profile platform 20 may include a user profile management module 201, a knowledge base module 203, a tag base 205, a data collection module 207, and an algorithm base 209. The data collection module 207 and the algorithm base 209 may alternatively not be included in the user profile platform 20, and are included in another platform in a terminal. In a working process, the user profile platform 20 may invoke the data collection module 207 and the algorithm base 209 from the another platform. The user profile platform 20 may alternatively share the knowledge base module 203 with the another platform.

### User profile management module 201

The user profile management module 201 has user profile model computation and management capabilities, and mainly has the following functions.
(1) The user profile management module 201 provides an interface to the outside, for example, an AIDL (Android Interface Definition Language, Android Interface Definition Language) interface in an Android system or another interface. An application in the terminal may send a registration request to the user profile platform 20 by using the interface, and read a user profile by using the interface.
(2) The user profile management module 201 may generate a user profile by working with the knowledge base module 203, the tag base 205, the data collection module 207, and the algorithm base 209.
(3) The user profile management module 201 may download an original user profile model from a cloud, where the user profile model may include a static profile model and a dynamic profile model. The user profile management module 201 may further return an updated user profile model to the cloud, so that the cloud further trains a general-purpose user profile model. In this way, a terminal and the cloud jointly train the user profile model. The user profile management module 201 may further store statistics information. The terminal may preset or download the statistics information from the cloud, or may continuously update the statistics information based on a user behavior. Some user tags or user preference may be obtained through simple statistics collection, without using the user profile model. When generating a user profile, the user profile management module 201 may use the user profile model, or may use both the user profile model and the statistics information.
(4) The user profile management module 201 may dynamically update the static profile model based on statistics information such as an activity, a behavior, and an interest that are of a user by working with the knowledge base module 203 and the tag base 205. With constant updating of the static profile model, basic attributes of the user become increasingly accurate, and another attribute of the user is also updated in a timely manner.
(5) The user profile management module 201 may dynamically update the dynamic profile model by working with the knowledge base module 203, the tag base 205, and the data collection module 207. The dynamic profile model is a model related to a real-time scenario, and is used to describe a dynamic characteristic of a static profile.

### Knowledge base module 203

The knowledge base module 203 has data processing and data storage management capabilities. The knowledge base module 203 obtains original user data from the data collection module 207, then classifies and processes the original user data, and generates or updates a knowledge base. User data stored in the knowledge base is data that is processed and that can be used by an upper-layer application. After generating the knowledge base, the knowledge base module 203 may update the knowledge base based on user data obtained subsequently. The knowledge base includes but is not limited to an interest knowledge base, a behavior knowledge base, and a comprehensive knowledge base.

The knowledge base module 203 may generate or update the interest knowledge base by analyzing information collected by the data collection module 207 such as an application type and In-App data (for example, an activity, a web page, or interface text). For example, the interest knowledge base may include preference of a user in aspects such as news/reading, gourmet, video, and music.

The knowledge base module 203 may generate or update the behavior knowledge base by analyzing a user operation, a point of interest (Point of Interest, POI), In-App data, and real-time scenario data that are collected by the data collection module 207. For example, the behavior knowledge base may include an application usage habit, a travel pattern, a work and rest habit, a shopping habit, a payment habit, a dining habit, an exercise habit, a wealth management habit, a travel habit, and the like. Each POI includes but is not limited to information such as a name, a category, a longitude and a latitude, a nearby hotel, a nearby restaurant, and a nearby shop.

The knowledge base module 203 may generate or update the comprehensive knowledge base by analyzing all user data collected by the data collection module 207 and then consolidating an address book and social information. For example, the comprehensive knowledge base may include basic information, a social attribute, and a physiological or psychological attribute that are of a user.

Optionally, the knowledge base module 203 may further have another data processing function. For example, the knowledge base module 203 may have a text semantics understanding capability. The text semantics understanding capability may be a capability of the knowledge base module 203 to perform, by analyzing text content obtained by the data collection module 207, word segmentation extraction or keyword extraction on the text content. A word segmentation algorithm and a word segmentation library may be added to the knowledge base module 203 to implement the text semantics understanding capability.

### Tag base 205

The tag base 205 is configured to store various tags, including a static tag and a real-time scenario tag. FIG. 4A-a, FIG. 4A-b, and FIG. 4B are schematic diagrams of various tags.

As shown in FIG. 4A-a and FIG. 4A-b, the static tag includes but is not limited to the following six categories of tags: a basic attribute, a social attribute, a behavioral habit, an interest and hobby, a psychological attribute, and mobile phone use preference.

The basic attribute includes but is not limited to: personal information and a physiological characteristic. The personal information includes but is not limited to: a name, an age, a certificate type, an educational background, a constellation, a belief, a marital status, and a mailbox.

The social attribute includes but is not limited to: an industry/occupation, a position, an income level, a child status, a vehicle usage status, housing, a mobile phone, and a mobile operator. The housing may include: renting a house, owning a house, and repaying a loan. The mobile phone may include: a brand and a price. The mobile operator may include: a brand, a network, a traffic characteristic, and a mobile number. The brand may include: China Mobile, China Unicom, China Telecom, and others. The network may include: none, 2G, 3G, and 4G The traffic characteristic may include: high, medium, and low.

The behavioral habit includes but is not limited to: a geographical location, a living habit, a mode of transportation, a type of selected hotel, an economic/wealth management characteristic, a dining habit, a shopping characteristic, and payment information. The living habit may include: a work and rest time, a home time, a working time, a computer Internet access time, and a shopping time. The shopping characteristic may include: a shopping category and a way of shopping. The payment information may include: a time of payment, a place of payment, a mode of payment, an amount of a single payment, and a total amount of payment.

The interest and hobby includes but is not limited to: reading preference, news preference, video preference, music preference, exercise preference, and travel preference. The reading preference may include: reading frequency, a reading time period, a total reading time, and reading classification.

The psychological attribute includes but is not limited to: a lifestyle, a personality, and values.

The mobile phone use preference includes but is not limited to: application preference, a notification reminder, an In-App operation, a commonly used application of a user, a system application, and common settings.

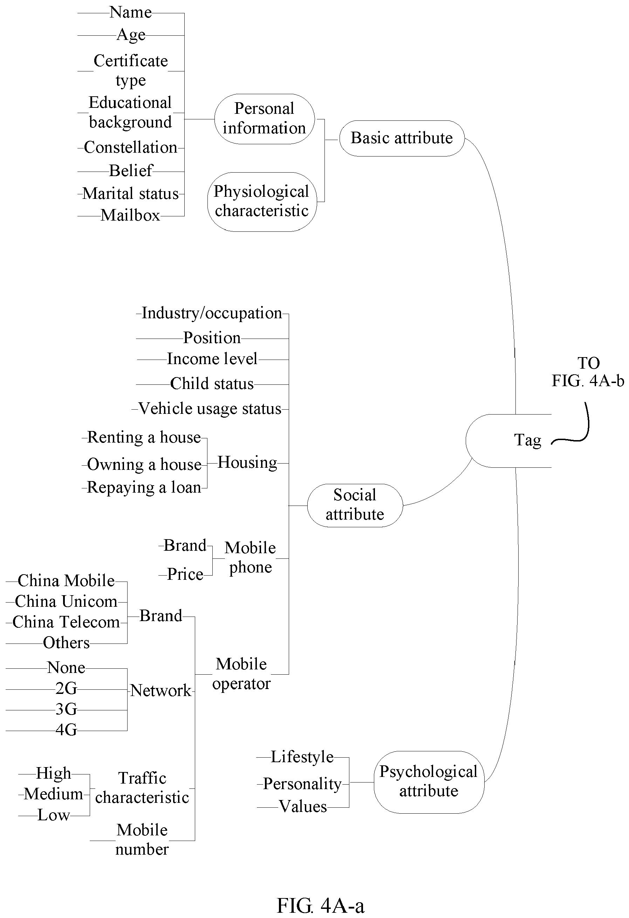

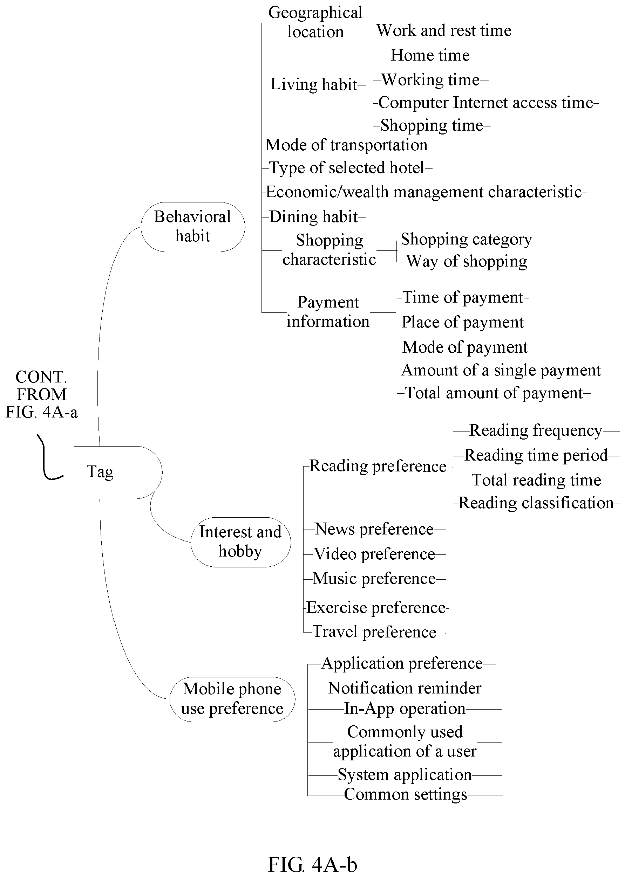

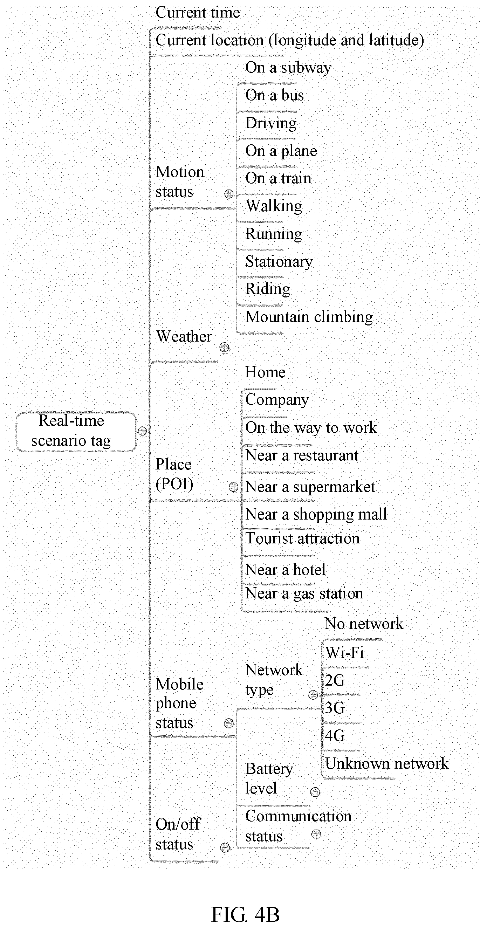

As shown in FIG. 4B, the real-time scenario tag includes but is not limited to: a current time, a current location (longitude and latitude), a motion status, weather, a place (POI), a mobile phone status, and an on/off status. The motion status may include: being on a subway, being on a bus, driving, being on a plane, being on a train, walking, running, being stationary, riding, and mountain climbing. The place (POI) may include: a home, a company, being on the way to work, being near a restaurant, being near a supermarket, being near a shopping mall, tourist attraction, being near a hotel, and being near a gas station. The mobile phone status may include: a network type, a battery level, and a communication status. The network type may include: no network, Wi-Fi, 2G, 3G, 4G, and an unknown network. The real-time scenario tag may also be referred to as a dynamic tag.

It should be noted that the foregoing various tags are merely used as examples. In a specific implementation, content in the tag base may be expanded based on a service requirement. A tag of a new type may be added, or an existing tag may be further classified.

### Data collection module 207

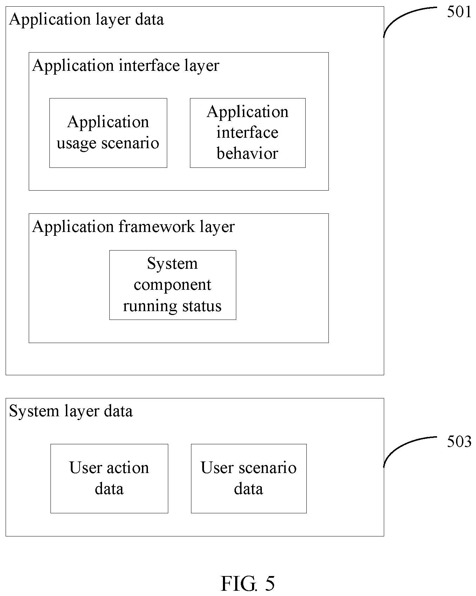

The data collection module 207 provides the user profile platform 20 with support for a basic metadata collection capability. The data collection module 207 may collect original user data, store the collected original data, and perform reading and writing management on the collected original data. Specifically, FIG. 5 is a schematic diagram of original user data according to an embodiment of the present invention. As shown in FIG. 5, the original user data collected by the data collection module 207 may include application layer data 501 and system layer data 503.

Specifically, an application layer may include an application interface layer and an application framework layer. The application layer data 501 includes an application usage scenario and a user interface behavior at the application interface layer, and a system component running status at the application framework layer.

The application usage scenario at the application interface layer may include, for example, the following scenarios: an application running scenario, a video scenario, a music scenario, a gourmet scenario, and the like. A user interface behavior in the application running scenario may include: an application name, an application use time, duration of use, and the like. A user interface behavior in the video scenario may include: a video name, a video stop time, a quantity of video playing episodes, a total quantity of video episodes, and the like. A user interface behavior in the music scenario may include: a music name, a music type, playing duration, playing frequency, and the like. A user interface behavior in the gourmet scenario may include: a store name, a gourmet type, a store address, and the like. During data collection, based on a specific case, data may be further collected by using a picture text perception technology. For example, text content in a picture may be recognized by using an optical character recognition (Optical Character Recognition, OCR for short) technology, to obtain text information in the picture.

The system component running status at the application framework layer may be obtained in the following manner: obtaining, by using a JS (JavaScript) injection technology at the application framework layer, page content of news browsed by a news application and page content of a web page browsed by a browser application; or intercepting all notification messages by using a notification message monitoring service, and obtaining information including a notification type, a scenario, a time, text content, and the like by parsing message content; or recognizing an application type by checking a running behavior of an application interface, to supplement application types that cannot be found in an application market or to recognize an application type in an offline state; or obtaining system real-time scenario information by using a system interface, that is, system real-time scenario information such as a time, a date, a battery level, a network status, a headset status, a Bluetooth on/off status, an auto-rotation on/off status, and a hotspot on/off status.

Specifically, the system layer data 503 may include user action data and user scenario data.

Collecting the user action data may include: collecting a behavior characteristic of a body of a user by using devices such as a sensor, and recognizing and collecting a current behavior of the user based on accumulated data, for example, recognizing and collecting the following behavior statuses: being in a vehicle, riding, walking, running, being stationary, and others. The sensor may include a distance sensor, an acceleration sensor, a barometric pressure sensor, a gravity sensor, a gyroscope, and the like.

Collecting the user scenario data may include: obtaining location information of a user by collecting a cell identity (cell ID) of a communications base station or by collecting Wi-Fi or GPS data, and obtaining, based on the location information, a scenario in which the user is in, for example, a home, a company, out of town, or another scenario.

A format of the original user data collected by the data collection module 207 may be, for example:
serial number + field name + field type + field description

A specific example is as follows:

| Serial number | Field name | Field type | Field description |
|---|---|---|---|
| 1 | week | int | 1 = Monday; 2 = Tuesday; ...; 7 = Sunday |
| 2 | network_type | int | Network type: 0 = no network; 1 = Wi-Fi; 2 = 2G network; 3 = 3G network; 4 = 4G network; 5 = unknown network |
| 3 | background_light | bool | Screen status: true = screen-on state; false = screen-off state |

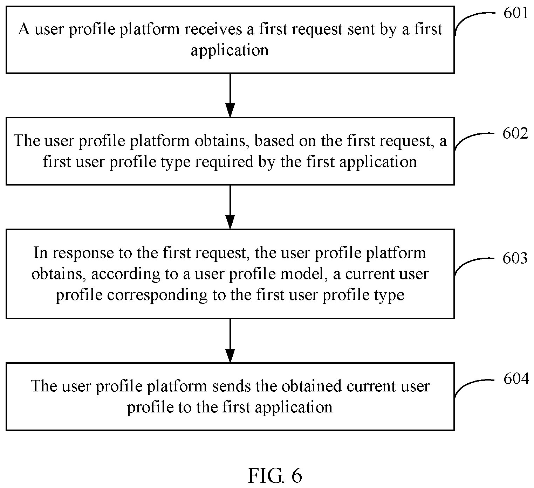

FIG. 6 is a schematic flowchart of a user profile generation method according to an embodiment of the present invention. The method is applied to a terminal. The terminal includes the user profile platform shown in FIG. 3 to FIG. 5. The terminal may further include a plurality of applications, including a first application. As shown in FIG. 6, the method includes the following steps.

Step 601: The user profile platform receives a first request sent by the first application.

The user profile platform may provide a user profile for an application in the terminal. As a user continuously uses the terminal, a user profile generated in the user profile platform changes. Therefore, when the first application needs to use a user profile, the first application may send the first request to the user profile platform, where the first request is used to request a current user profile. It should be noted that as the user continuously uses the terminal, a user profile provided by the user profile platform in the embodiments of the present invention is continuously updated. Therefore, in a running process, the first application also continuously requests a user profile from the user profile platform. For example, when being run today, the first application sends a first request to request a user profile; and when the first application is run again tomorrow, because the user profile may have changed, the first application sends another first request to request a user profile. The current user profile is a user profile existing when step 601 is performed, and is specifically a user profile output by the user profile platform when the first application sends the first request.

Step 602: The user profile platform obtains, based on the first request, a first user profile type required by the first application.

A user profile may be of a plurality of types, for example, a shopping characteristic type, a news preference type, or a music preference type. Different applications may use different types of user profiles. Each application may use one or more types of user profiles.

The first request may carry a user profile type required by the first application, that is, the first user profile type. Therefore, the user profile platform may obtain the first user profile type based on the first request. Alternatively, the first application may inform the user profile platform in advance of the first user profile type required by the first application. After receiving the first request, the user profile platform may learn of the first user profile type through querying.

Step 603: In response to the first request, the user profile platform obtains, according to a user profile model, a current user profile corresponding to the first user profile type.

The user profile platform includes the user profile model. The user profile model may be continuously updated by the user profile platform. An original user profile model included in the user profile platform may be stored in the terminal in advance. Alternatively, the user profile platform may obtain an original user profile model from a network side in advance, and then in a subsequent process, continuously update the user profile model. Specifically, the user profile model may include a static profile model, or include a dynamic profile model, or include a static profile model and a dynamic profile model.

After obtaining the first user profile type, the user profile platform obtains, according to a current user profile model, a current user profile corresponding to the first user profile type. As the user continuously uses the terminal, the user profile model is continuously updated. The current user profile model is a user profile model existing when the user profile platform needs to obtain a user profile, and in this embodiment, is specifically a user profile model existing when step 603 is performed, that is, a user profile model existing when the first request is responded to.

When only a static profile model needs to be used during obtaining of the user profile corresponding to the first user profile type, the user profile platform may generate the current user profile according to a current static profile model.

When a dynamic profile model needs to be used during obtaining of the user profile corresponding to the first user profile type, the user profile platform may first obtain current scenario data, and then obtain, through computation based on the scenario data and the user profile model, the current user profile corresponding to the first user profile type.

Step 604: The user profile platform sends the obtained current user profile to the first application.

Further, before the first application requests the user profile from the user profile platform, the first application may first send a registration request to the user profile platform. In this embodiment of the present invention, a specific occasion on which the registration request is sent is not limited. For example, each application that needs to use a user profile may send a registration request to the user profile platform immediately after being installed on the terminal; or the application may send a registration request to the user profile platform when being used for a first time. For a preinstalled application in the terminal, the preinstalled application may alternatively send a registration request to the user profile platform when the terminal is started for a first time; or a registration request of the preinstalled application is directly configured in the user profile platform at delivery, without sending the registration request. The registration request may include the first user profile type required by the first application, and the registration request may further include other information required for generating the user profile corresponding to the first user profile type, for example, required user data, a required algorithm, and other configuration information.

Another application in the terminal may also register with the user profile platform and request a user profile from the user profile platform. A specific process is similar to a process of the first application. For example, the terminal further includes a second application. A process in which the second application requests a user profile from the user profile platform may include:
receiving, by the user profile platform, a second request sent by the second application, where the second request is used to request a current user profile; obtaining, by the user profile platform based on the second request, a second user profile type required by the second application; in response to the second request, obtaining, by the user profile platform according to a current user profile model, a current user profile corresponding to the second user profile type; and sending, by the user profile platform to the second application, the current user profile corresponding to the second user profile type. For the second application, the current user profile model and the current user profile are respectively a user profile model and a user profile that exist when the second application sends the second request.

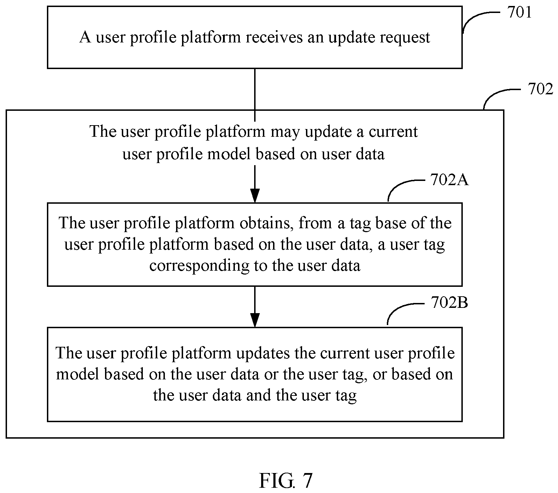

It should be noted that the user profile model in the embodiments of the present invention can be continuously updated. FIG. 7 is a flowchart of a user profile model updating method according to an embodiment of the present invention. As shown in FIG. 7, the method includes the following steps.

Step 701: The user profile platform receives an update request. An update mechanism may be set in a terminal, and the user profile platform may be periodically triggered, according to the preset update mechanism, to perform updating; or after a preset condition is met, the user profile platform may be triggered to perform updating. The terminal sends an update request to the user profile platform, that is, triggers the user profile platform to perform updating.

Step 702: The user profile platform may update a current user profile model based on user data. Specifically, step 702 may include the following step 702Aand step 702B. The current user profile model is a user profile model existing when step 702 is performed.

Step 702A: The user profile platform obtains, based on the user data, from a tag base of the user profile platform, a user tag corresponding to the user data.

Step 702B: The user profile platform updates the current user profile model based on the user data or the user tag, or based on the user data and the user tag. Specifically, a user profile model may include a plurality of user profile types. In other words, the plurality of user profile types may be obtained from the user profile model. When registering with the user profile platform, each application adds, to a registration request, a user profile type required by the application. A user profile type required by an application may already be included in the current user profile model, or may not be included in the current user profile model. For example, if the user profile model already includes the first user profile type before the first application registers the first user profile type with the user profile platform, when updating the user profile model, the user profile platform trains, according to an update algorithm, the user profile model by using the user data. If the user profile model does not include the first user profile type before the first application registers the first user profile type with the user profile platform, when updating the user profile model, the user profile platform adds the first user profile type to the current user profile model, and trains, according to an update algorithm, a latest user profile model by using user data.

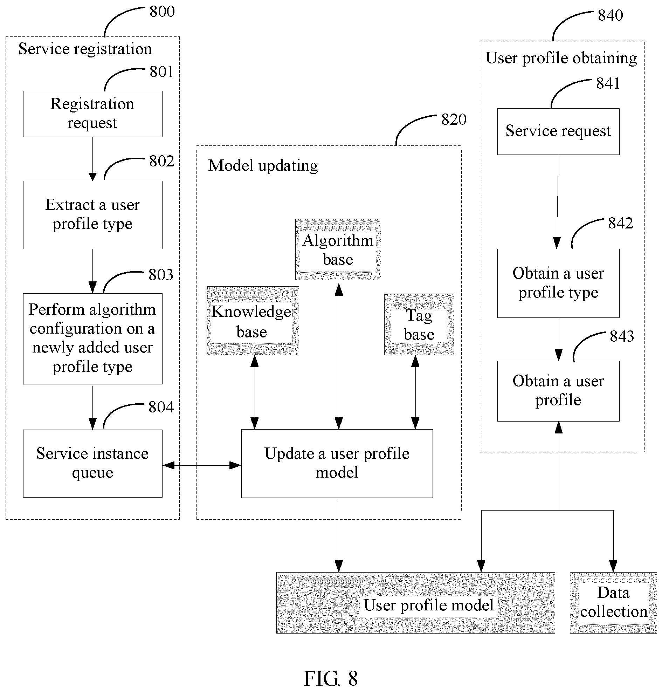

FIG. 8 is a schematic diagram of a work procedure of a user profile platform according to an embodiment of the present invention. As shown in FIG. 8, three work procedures are included: service registration 800, model updating 820, and user profile obtaining 840. With reference to the embodiments described in FIG. 3 to FIG. 7, the foregoing three work procedures are separately described.

### Service registration 800

Before requesting a user profile from the user profile platform, one or more applications in a terminal need to first perform service registration with the user profile platform. The following uses an application A as an example for description. As shown in FIG. 8, the following steps are included.

Step 801: The application A may send a registration request to the user profile management module 201 by using a service interface after being installed on a terminal, or after being started for a first time, or on another preset occasion. The registration request may include a configuration file. The configuration file may include one or more profile types, description information of data and an algorithm that are required for generating these profile types, and other configuration information. A profile type carried in the registration request is a user profile type required by the application A. An application obtains a user profile usually for a purpose of implementing some functions of the application. Therefore, because categories or properties of applications are different, user profile types required by the applications may be different. A plurality of applications in the terminal may separately require different types of user profiles. One application may request one or more types of user profiles.

Step 802: After receiving the registration request sent by the application A, the user profile management module 201 loads the configuration file in the registration request, and extracts the user profile type carried in the registration request.

According to a user profile model already existing in the user profile platform, user profiles of a plurality of types may be generated. When the application A performs service registration, a user profile type registered by the application A may already be included in the existing user profile model, or may not be included in the existing user profile model. For example, the application A registers a user profile type a. Before the application A completes the service registration, user profile types that can be provided by the existing user profile model may already include the user profile type a, or user profile types that can be provided by the existing user profile model do not include the user profile type a. When the user profile types that can be provided by the existing user profile model do not include the user profile type requested by the application A, step 803 may be further performed. When the user profile types that can be provided by the existing user profile model include the user profile type requested by the application A, the following steps 803 and 804 may not be performed.

Step 803: The user profile management module 201 performs algorithm configuration on a newly added user profile type. Specifically, when the user profile type requested by the application A is not included in the existing user profile model, the user profile type requested by the application A is a newly added user profile type. The user profile management module 201 may generate, based on configuration information included in the configuration file such as required data and a required algorithm, a service instance corresponding to the newly added user profile type. Usually, one user profile type is corresponding to one service instance. It should be noted that two different applications may request a same-type user profile, but each application may have a different requirement for the same-type user profile. In other words, configuration files of the two applications may have different content. For example, both the application A and an application B request a user profile of the type a, but the application A may require that the user profile of the type a be generated or trained by using an algorithm 1 and an algorithm 2, whereas the application B may require that the user profile of the type a be generated or trained by using an algorithm 3, an algorithm 4, and an algorithm 5. In this case, the user profile management module 201 may obtain priorities of the application A and the application B, and then generate a service instance based on a requirement of an application with a higher priority. For example, if a priority of the application A is higher than a priority of the application B, the service instance is generated based on a requirement of the application A.

Step 804: The service instance generated by the user profile management module 201 is added to a service instance queue. A plurality of applications in the terminal may all send a registration request to the user profile management module 201. Each newly added user profile type may be corresponding to one service instance. When there are a plurality of newly added user profile types, the service instance queue includes a plurality of service instances. A plurality of user profile types included in an original user profile model may also each be corresponding to one service instance. These service instances may also be in the foregoing service instance queue, or these service instances may be separately maintained.

### Model updating 820

The user profile platform continuously updates a user profile model based on a system setting, so that the user profile platform can generate a continuously updated user profile. With reference to FIG. 3 to FIG. 8, a process of model updating 820 may include the following:

The user profile management module 201 may obtain an original user profile model from a network side in advance. The original user profile model may be obtained through training by the network side based on big data.

The user profile management module 201 may receive an update instruction periodically, or the user profile management module 201 may be configured to periodically perform model updating, or when the terminal meets some conditions, for example, when a user triggers an action, an update instruction is sent to the user profile management module 201.

After receiving an update instruction, the user profile management module 201 continuously updates a current user profile model based on user data collected by the terminal. Specifically, the user profile management module 201 obtains, from a tag base based on user data stored in a knowledge base, a user tag corresponding to the user data; and then trains the current user profile model based on the user data, or the user tag, or the user data and the user tag, and according to a preset algorithm obtained from an algorithm base, to obtain an updated user profile model. Specifically, when training the user profile model, the user profile management module 201 may schedule service instances in the service instance queue, and then sequentially train, based on these service instances, the user profile model by using the user data and/or the user tag. In a training process, only currently updated user data may be used, or user data within a previous period of time may be used. In the present invention, a specific method is not limited.

After the user profile model is updated, the newly added user profile type that is registered by the application is added to the current user profile model. In other words, according to the updated user profile model, a new-type user profile can be generated.

The algorithm base may include a plurality of algorithms. The user profile management module 201 may call one or more algorithms based on a service instance, to train the user profile model.

### User profile obtaining 840

During application running, when an application needs to use a user profile, the application may request a current user profile from the user profile platform. The following uses the application A as an example for description. As shown in FIG. 8, the following steps are included.

Step 841: The application A sends a service request to the user profile management module 201 by using an interface.

Step 842: The user profile management module 201 may obtain, based on the service request, a user profile type a required by the application A.

Step 843: The user profile management module 201 obtains, according to a current user profile model, a current user profile corresponding to the type a. It should be noted that if a dynamic user profile is currently requested, the user profile management module 201 needs to obtain current scenario data from a data collection module, and then inputs the current scenario data to a dynamic user profile model, to obtain a dynamic user profile.

The user profile in the embodiments of the present invention may include a predicted result of a current behavior or preference of a user. In other words, the predicted result includes at least one of a prediction of the current behavior of the user and a prediction of the current preference of the user. For example, a user profile output by the user profile platform may be as follows:
User profile 1: A probability that the user may currently drink coffee is 40%, a probability that the user may currently drink a beverage is 20%, and a probability that the user may currently eat bread is 10%. The user profile platform may predict a plurality of types of current possible behaviors or preference of the user. Each type of behavior or preference is corresponding to a probability. When outputting a user profile, the user profile platform may output all predicted results, or may output only one or more results with highest probabilities. For example, in this example, the user profile platform may predict 10 results, but outputs only the first three results with highest probabilities.
User profile 2: A current scenario is on the way to work. Based on the scenario, a probability that the user may currently listen to music is 50%, a probability that the user may currently listen to news is 30%, and a probability that the user may currently listen to a novel is 20%. In some scenarios, the user profile platform may predict only three possible behaviors.
User profile 3: A probability that the user may currently read is 55%, a probability that the user may currently exercise is 30%, and a probability that the user may currently play a game is 10%.
User profile 4: A probability that the user currently likes swimming is 30%, a probability that the user currently likes running is 20%, a probability that the user currently likes traveling is 18%, and a probability that the user currently likes painting is 15%.

It should be noted that the user profile platform provided in the embodiments of the present invention may work with a cloud to jointly train a user profile model. A specific method may include the following steps:
obtaining, by a server on the cloud, a general-purpose user profile model through training based on big data, that is, the foregoing original user profile model;
delivering, by the server, the general-purpose user profile model to a plurality of terminals;
when a user uses a terminal, continuously updating, by each terminal, a local user profile model based on user data;
a period of time later, uploading, by each terminal, the updated user profile model to the server on the cloud; and
obtaining, by the server, an updated general-purpose user profile model through further training according to a plurality of updated user profile models, and then delivering the updated general-purpose user profile model to the terminals, so that the terminals update local user profile models again. These operations are performed on and on. In this way, the terminals and the cloud jointly train the user profile model through cyclical and iterative updating.

The user profile platform provided in the embodiments of the present invention may provide a user profile for a plurality of applications in the terminal, so that these applications provide the user with intelligent services based on the user profile. All applications that provide content-type information can provide related user-interested content, information, or data based on a user profile. All of the following applications may obtain a user profile from the user profile platform: a system setting application, which may configure a common operation item of a user based on a daily setting operation habit of the user, for example, providing the user with an operation tip of a correct use method after identifying that the user has incorrectly used a system function a plurality of times, learning a daily application usage habit of the user, and providing/recommending an application and a direct-to function service in the application to the user with reference to scenario information such as a time, a date, a place, and an environment; a charging management module, which determines, based on a description of a user profile, an in-vehicle charging scenario encountered by a taxi/private car driver during operation, and can adjust a charging mode automatically; photo classification, in a photo library application, which analyzes a social relation of a user, associates people portraits in photos, and can classify portraits automatically; a setting-free intelligent alarm clock and setting-free item list reminder; automatic temperature setting, automatic air quality adjustment, an automatic intelligent household appliance control program, and automatic lighting; automatic door locking, an unlocked door alarm, and a camera exception alarm; an automatic low-power reminder and one-click setting; sleep reminder and automatic music or lighting configuration; and travel planning, location reminder, intelligent navigation, scheduling, and a guide; and
ticket management: ticket price forecasting, reservation of automatic scheduled ticket preemption, one-click ticket changing/refunding operation, and reminding before expiration;
intelligent photographing: photographing point recommendation, angle recommendation, and automatic parameter optimization;
schedule management: work arrangement, meeting reminding, and schedule template;
learning management: learning plan, course recommendation, and progress supervision and management;
health management: health assessment, medication reminding, and chronic disease monitoring;
diet management: weight management, calorie monitoring (identifying calories of food through photographing), recipe advice, and nutrition management;
fitness management: fitness plan, course recommendation, and supervision and reminding;
family socialization: family gallery, automatic photo album sorting, and intelligent pushing and sharing by interest and intimacy;
intelligent tour guiding: automatic fence triggering, tour route planning, scenic spot POI introduction, people flow thermodynamic diagram, and service facility navigation;
intelligent weather: automatic reminding of taking an umbrella on a rainy day, reminding of adding clothes when the temperature drops, and sunstroke prevention reminding at high temperatures;
emotion management: user emotion monitoring based on information such as a pulse, an instant messaging message, a circle of friends, and microblog, and reminding a user of a health risk;
rest reminding: rest reminding for scenarios such as being sedentary, long-time driving, and being in a work place for a long time; and
dual-card management: switching between two cards within different time periods and under different conditions, for example, automatically using data traffic of one card when the other card is short of data traffic, or using only one card in off-work hours.

In the embodiments of the present invention, a unified, intelligent, and open user profile platform is established on a mobile terminal, and has unified data collection and processing capabilities and a unified user profile tag base. The user profile platform manages user profiles together, and provides a user profile capability for various services and applications.

The user profile platform provided in the embodiments of the present invention trains a user profile model by using all user data that can be collected in the terminal, so that the user profile model becomes more accurate. For example, when an application A obtains a user profile from the user profile platform, the user profile platform generates the user profile based on all data in the terminal, and not only based on data in the application A. The user profile obtained in this way is more precise. Therefore, the user profile platform provided in the embodiments of the present invention provides, on a mobile terminal, a user with a more accurate artificial intelligence service. After the user profile platform is open to applications of various types, all applications can provide various smart services by using a local unified user profile model in the terminal. This can lower a threshold of artificial intelligence for a mobile terminal. An application developer who lacks an artificial intelligence development capability can implement a smart service by directly using a user profile platform open to a terminal, thereby greatly reducing a development workload and a technical capability of a third-party application.

A user-specific profile model is trained locally in the terminal, and then an accurate user profile can be generated according to the local user profile model in the terminal. In this way, a user profile can be obtained without uploading user data to a cloud, thereby avoiding a leakage of user privacy data.

In addition, the cloud can train a common model according to differentiated profile models reported by a plurality of terminals, without requesting specific user data from the terminals. Therefore, the terminals do not need to report any personal data of a user to the cloud, and merely need to report a user profile model for the cloud to train the common mode, thereby protecting user privacy data.

With descriptions of the foregoing implementations, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer. In addition, any connection may be appropriately defined as a computer-readable medium. For example, if software is transmitted from a website, a server or another remote source by using a coaxial cable, an optical fiber/cable, a twisted pair, a digital subscriber line (DSL) or wireless technologies such as infrared ray, radio, and microwave, the coaxial cable, optical fiber/cable, twisted pair, DSL or wireless technologies such as infrared ray, radio, and microwave are included in a definition of a medium to which they belong. For example, a disk (disk) and disc (disc) used by the present invention include a compact disc (CD), a laser disc, an optical disc, a digital versatile disc (DVD), a floppy disk and a Blu-ray disc, where the disk usually copies data by a magnetic means, and the disc copies data optically by a laser means. The foregoing combination should also be included in the protection scope of the computer-readable medium.

The descriptions are only specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A user profile generation method, applied to a terminal, wherein the terminal comprises a user profile platform and a first application, and the method comprises:
receiving, by the user profile platform, a first request sent by the first application, wherein the first request is used to request a current user profile;
obtaining, by the user profile platform based on the first request, a first user profile type required by the first application;
in response to the first request, obtaining, by the user profile platform according to a user profile model, a current user profile corresponding to the first user profile type, wherein the user profile model is comprised in the user profile platform; and
sending, by the user profile platform, the obtained current user profile to the first application.

2. The method according to claim 1, further comprising:
when the user profile platform receives an update request, updating, by the user profile platform, a current user profile model based on user data.

3. The method according to claim 1 or 2, wherein before the receiving, by the user profile platform, a first request sent by the first application, the method further comprises:
receiving, by the user profile platform, a registration request sent by the first application, wherein the registration request comprises the first user profile type required by the first application.

4. The method according to claim 3, wherein when the user profile platform receives the registration request, if the current user profile model does not comprise the first user profile type, the updating, by the user profile platform, a current user profile model based on user data comprises:
adding, by the user profile platform, the first user profile type to the current user profile model based on the user data.

5. The method according to any one of claims 2 to 4, wherein the updating, by the user profile platform, a current user profile model based on user data comprises:
obtaining, by the user profile platform based on the user data, from a tag base of the user profile platform, a user tag corresponding to the user data; and
updating, by the user profile platform, the current user profile model based on at least one of the user data and the user tag.

6. The method according to any one of claims 1 to 5, wherein
an original user profile model comprised in the user profile platform is stored in the terminal in advance; or
the user profile platform obtains an original user profile model from a network side in advance.

7. The method according to any one of claims 1 to 6, wherein the user profile model comprises at least one of a static profile model and a dynamic profile model.

8. The method according to claim 7, wherein when the user profile model is a dynamic profile model, the obtaining, by the user profile platform according to a user profile model, a current user profile corresponding to the first user profile type comprises:
obtaining, by the user profile platform, current scenario data; and
obtaining, by the user profile platform through computation based on the scenario data and the user profile model, the current user profile corresponding to the first user profile type.

9. The method according to any one of claims 1 to 8, wherein the terminal further comprises a second application, and the method further comprises:
receiving, by the user profile platform, a second request sent by the second application, wherein the second request is used to request a current user profile;
obtaining, by the user profile platform based on the second request, a second user profile type required by the second application;
in response to the second request, obtaining, by the user profile platform according to a current user profile model, a current user profile corresponding to the second user profile type; and
sending, by the user profile platform to the second application, the current user profile corresponding to the second user profile type.

10. The method according to any one of claims 1 to 9, wherein the user profile comprises a predicted result of a current behavior or preference of a user.

11. A terminal, comprising a first application and a user profile platform, wherein the user profile platform comprises:
a data collection module, configured to collect first user data of the terminal;
a knowledge base module, configured to: obtain the first user data from the data collection module, obtain second user data based on the first user data, and generate or update a knowledge base based on the second user data, wherein the knowledge base is configured to store the second user data;
a tag base, configured to store a tag; and
a user profile management module, configured to store a user profile model, wherein
the user profile management module is further configured to: obtain a tag corresponding to the second user data from the tag base based on the second user data in the knowledge base, and generate a user tag;
the user profile management module is further configured to update a current user profile model based on at least one of the second user data and the user tag; and
the user profile management module is further configured to: receive a first request sent by the first application, wherein the first request is used to request a current user profile; and in response to the first request, obtain, based on the first request, a first user profile type required by the first application, obtain, according to a current user profile model, a current user profile corresponding to the first user profile type, and send the obtained current user profile to the first application.

12. The terminal according to claim 11, wherein
the user profile management module is further configured to: before receiving the first request sent by the first application, receive a registration request sent by the first application, wherein the registration request comprises the first user profile type required by the first application.

13. The terminal according to claim 12, wherein when the user profile management module receives the registration request, if the current user profile model does not comprise the first user profile type, that the user profile management module updates the current user profile model based on at least one of the second user data and the user tag comprises:
the user profile management module adds the first user profile type to the current user profile model based on at least one of the second user data and the user tag.

14. The terminal according to any one of claims 11 to 13, wherein the user profile management module updates the current user profile model in the following manner:
when an update request is received, the user profile management module updates the current user profile model based on at least one of the second user data and the user tag.

15. The terminal according to any one of claims 11 to 14, wherein an original user profile model is stored in the user profile management module in advance.

16. The terminal according to any one of claims 11 to 15, wherein the user profile management module is further configured to obtain an original user profile model from a network side in advance.

17. The terminal according to any one of claims 11 to 16, wherein the user profile model comprises at least one of a static profile model and a dynamic profile model.

18. The terminal according to claim 17, wherein when the user profile model is a dynamic profile model, that the user profile management module obtains, according to the current user profile model, the current user profile corresponding to the first user profile type comprises:
the user profile management module obtains current scenario data from the data collection module; and
the user profile management module obtains, through computation based on the scenario data and the current user profile model, the current user profile corresponding to the first user profile type.

19. The terminal according to any one of claims 11 to 18, wherein the terminal further comprises a second application, and the user profile management module is further configured to:
receive a second request sent by the second application, wherein the second request is used to request a current user profile; and in response to the second request, obtain, based on the second request, a second user profile type required by the second application, obtain, according to a current user profile model, a current user profile corresponding to the second user profile type, and send, to the second application, the current user profile corresponding to the second user profile type.

20. The terminal according to any one of claims 11 to 19, wherein the user profile comprises a predicted result of a current behavior or preference of a user.

21. A terminal, comprising:
one or more processors; and
one or more memories, wherein the one or more memories store one or more computer programs, the one or more computer programs comprise an instruction, and when the instruction is executed by the one or more processors, the terminal performs the method according to any one of claims 1 to 10.

22. An electronic device, wherein the electronic device comprises an apparatus that performs the method according to any one of claims 1 to 10.

23. A computer program product comprising an instruction, wherein when the computer program product runs on an electronic device, the electronic device performs the method according to any one of claims 1 to 10.

24. A computer-readable storage medium, comprising an instruction, wherein when the instruction runs on an electronic device, the electronic device performs the method according to any one of claims 1 to 10.
